# EUROPEAN PATENT APPLICATION

(11) **EP 4 606 460 A1**
(43) Date of publication of application: **27.08.2025**
(21) Application number: 24460011.0
(22) Date of filing: 23.02.2024
(51) Int. Cl.: B01D 53/14, B01D 53/18

(54) **METHOD FOR THE MASS TRANSFER IN GAS-LIQUID OR GAS-SLURRY OR VAPOR-LIQUID EXCHANGES USING ROTATING PACKED BED DEVICES**

(71) Applicant: Saipem S.p.A., 20138 Milano (IT); Prospin sp. z o.o., 92-318 LOdz (PL); Proceler, Michal Pawlowski, 04-796 Warsaw (PL)
(72) Inventor: Pawlowski, Michal, 92-318 Lódz (PL); Pela, Jerzy, 92-318 Lódz (PL); Zawadzki, Dawid, 92-318 Lódz (PL); Górak, Andrzej, 92-318 Lódz (PL)
(74) Representative: Croce, Valeria

(57) **Abstract**

The present invention finds application in all the fields wherein a gas-liquid or gas-slurry or vapor-liquid exchange is required.

## Description

Processes for the mass transfer have large applications in industry. Since the Rotating Packed Bed device (RPB) was invented, it had been successfully applied in various chemical process, such as distillation, absorption, polymerization and steel-making as it allows a reduction of the installation costs (CAPEX) and of the operational costs (OPEX) and increase in performances.

Figure 1 schematically represents a prior-art RPB 1 (for instance known from US 4.283.255), comprising a stationary vessel 4 with a first inlet port 5 connected to a first inlet pipe assembly (not shown in the figure) for introducing a first inlet flow, which exits as the first outlet flow through the first outlet port 6 connected to a first outlet pipe assembly (not shown in the figure).

The stationary vessel 4 also comprises a second inlet port 7 connected to a second inlet pipe assembly connected with the interior of the rotor through respective apertures (not shown in the figure) for introducing a second inlet flow, which is released as the second outlet flow through the second outlet port 9 connected to the second outlet assembly and connected with the interior of the rotor 2 through respective apertures (not shown).

Within the stationary vessel 4 is housed a rotor 2 connected to a shaft 3 connected to a motor (not shown) for rotation around its longitudinal axis.

The rotor 2 comprises a packed bed.

In some process cases, the liquid loading in the Rotating Packed Bed (RPB) rotor is low, such that the hydrodynamics of the process are affected. A small liquid load is difficult to evenly distribute on the RPB packing and may cause the creation of dry spots in the packing, effectively reducing the overall performance of apparatus. Several attempts have been made in order to modify the structure of the RPB in order to further improving the efficiency of the processes, but none provided satisfactory results.

### Summary of the invention

The inventors of the present patent application have surprisingly developed a method to improve the efficiency of processes using a Rotating Packed Bed device (RPB) for mass transfer applications.

Such a method can be applied to gas-liquid or gas-slurry or vapor-liquid exchanges.

### Brief description of the figures

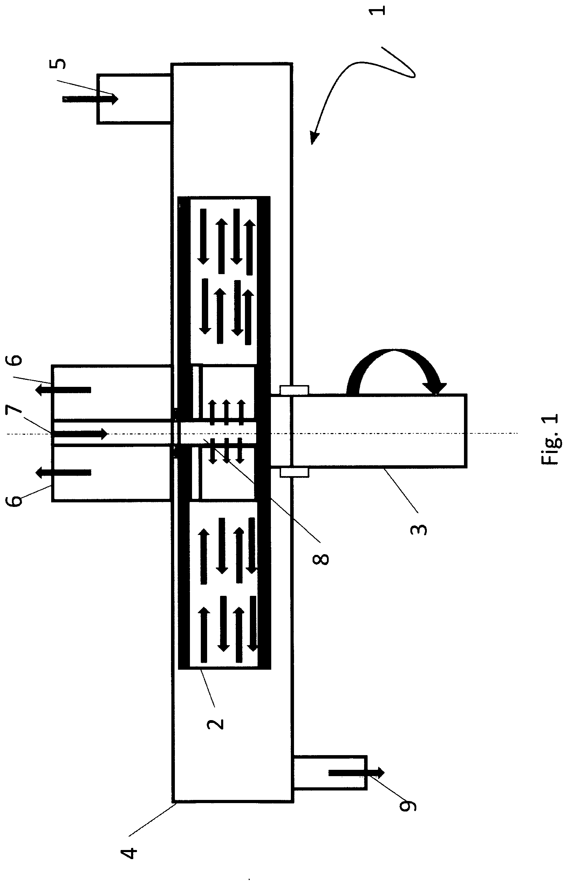

Figure 1 shows a cross-section of a Rotating Packed Bed according to the prior-art.
Figure 2 shows a cross-section of a Rotating Packed Bed according to an embodiment of the present invention.
Figure 3 shows a cross-section of a battery of two Rotating Packed Beds according to an embodiment of the present invention.
Figure 4 shows a cross-section of a battery of two Rotating Packed Beds according to another embodiment of the present invention.
Figure 5 shows a cross-section of a battery of n Rotating Packed Beds according to an embodiment of the present invention.
Figure 6 shows a process for the absorption of CO₂ from a CO₂-loaded gas according to the prior-art.
Figure 7 shows a process for the absorption of CO₂ from a CO₂-loaded gas according to an embodiment of present invention.
Figure 8 shows a process for the absorption of CO₂ from a CO₂-loaded gas according to another embodiment of present invention.
Figure 9 shows a cross-section of the rotor of a Rotating Packed Bed according to a first embodiment of the invention.
Figure 10 shows a cross-section of the rotor of a Rotating Packed Bed according to a second embodiment of the invention.
Figure 11 shows a cross-section of the rotor of a Rotating Packed Bed according to a third embodiment of the invention.
Figure 12 shows a cross-section of the rotor of a Rotating Packed Bed according to a fourth embodiment of the invention.
Figure 13 shows the absorption efficiency of a process for the absorption of CO₂ according to the invention.

### Objects of the invention

In a first object, the present invention discloses an improved method for the gas-liquid or gas-slurry or vapor-liquid exchanges using Rotating Packed Bed devices.

In an embodiment, the present invention discloses a process comprising the improved method for the gas-liquid or gas-slurry or vapor-liquid exchanges using Rotating Packed Bed devices.

In an embodiment of the invention, there is disclosed a process for the capture of CO₂ from CO₂-rich gases.

In an embodiment of the invention, there is disclosed a process for the capture of CO₂ from CO₂-rich gases and for the release of a flow of CO₂ and a CO₂-lean gas.

In a second object, the present invention discloses a Rotating Packed Bed, which improves the gas-liquid or gas-slurry or vapor-liquid exchanges.

### Detailed description of the invention

According to the first object, in the present invention it is disclosed an improved method for gas-liquid or vapor-liquid or gas-slurry exchanges using Rotating Packed Bed devices (in the following description referred to as RPB).

For the purposes of the present invention, the method comprises the use of a Rotating Packed Bed (RPB).

According to the present invention, there is disclosed a method for improving an exchange process comprising the step of contacting a first inlet flow with a second inlet flow and obtaining a first outlet flow and a second outlet flow, wherein said contacting is carried out in a RPB and wherein at least a portion of the second outlet flow is at least partially recirculated in the method.

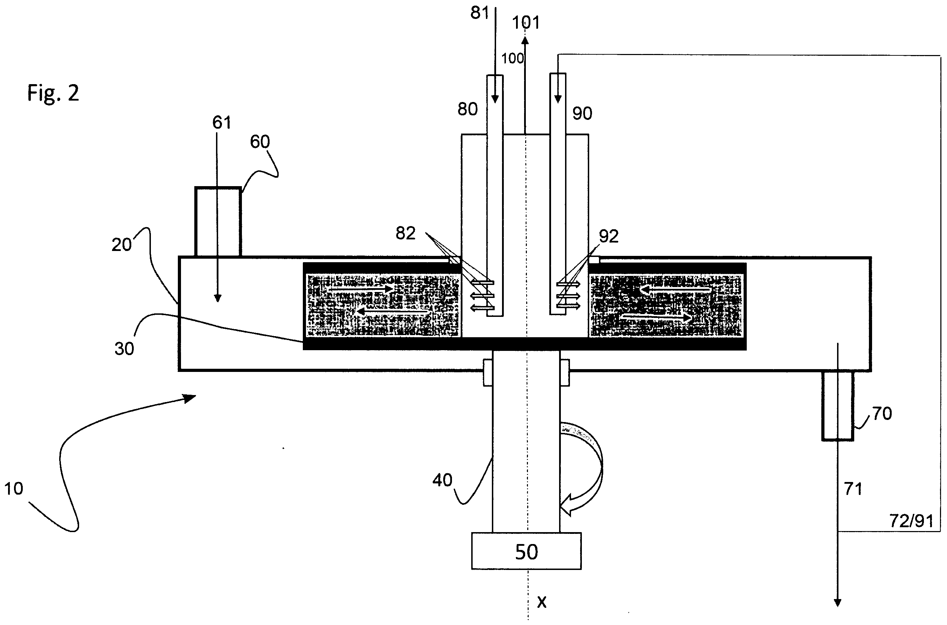

A RPB according to a first embodiment of the present invention is schematically represented in Figure 2.

In particular, the RPB 10 comprises a stationary vessel 20 housing a rotor 30.

The rotor 30 is mechanically coupled to a shaft 40 connected to a motor 50 for rotation around axis x.

Within the rotor 30 is housed a packed bed (in grey in the figures).

The rotor 30 and the stationary vessel 20 are in fluid communication.

The stationary vessel 20 comprises a first inlet port 60 connected to a first inlet pipe assembly (not shown in the figure) for introducing a first inlet flow 61 into the stationary vessel 20, which is released as the first outlet flow 101 through the first outlet port 100 connected to a first outlet pipe assembly (not shown in the figures), wherein said first outlet pipe assembly is coupled to and in fluidic connection with the rotor 30.

The RPB 10 also comprises a second inlet port 80 connected to a first liquid distributor for introducing a second inlet flow 81 into the rotor 30, which is released as the second outlet flow 71 from the stationary vessel 20 through a second outlet port 70 connected to a second outlet pipe assembly (not shown in the figure).

In particular, the first liquid distributor is coupled to the rotor 30 and is in fluidic connection with the rotor 30 through apertures of the first liquid distributor 82.

According to an embodiment of the present invention, the RPB 10 also comprises a third inlet port 90 connected to a second liquid distributor for introducing a third inlet flow 91 into the rotor 30.

In particular, the second liquid distributor is coupled to the rotor 30 and is in fluidic connection with the rotor 30 through apertures of the second liquid distributor 92.

Both the second inlet flow 81 and the third inlet flow 91 are then collected at the second outlet port 70.

In operation, the first inlet flow 61 is introduced within the stationary vessel 20 and is forced radially inward through the rotor 30, while the second inlet flow 81 is introduced into the rotor 30 and is forced radially outward through apertures of the first liquid distributor 82 and exits the stationary vessel 20 as the second outlet flow 71.

According to an embodiment of the present invention, a first portion 72 of the second outlet flow 71 is recirculated to the RPB 10.

In particular, said first portion 72 of the second outlet flow 71 is recirculated into the RPB 10 via the third inlet pipe assembly and represents the third inlet flow 91.

According to a second embodiment of the invention, the method disclosed can be carried out using two or more RPBs fluidically connected to each other.

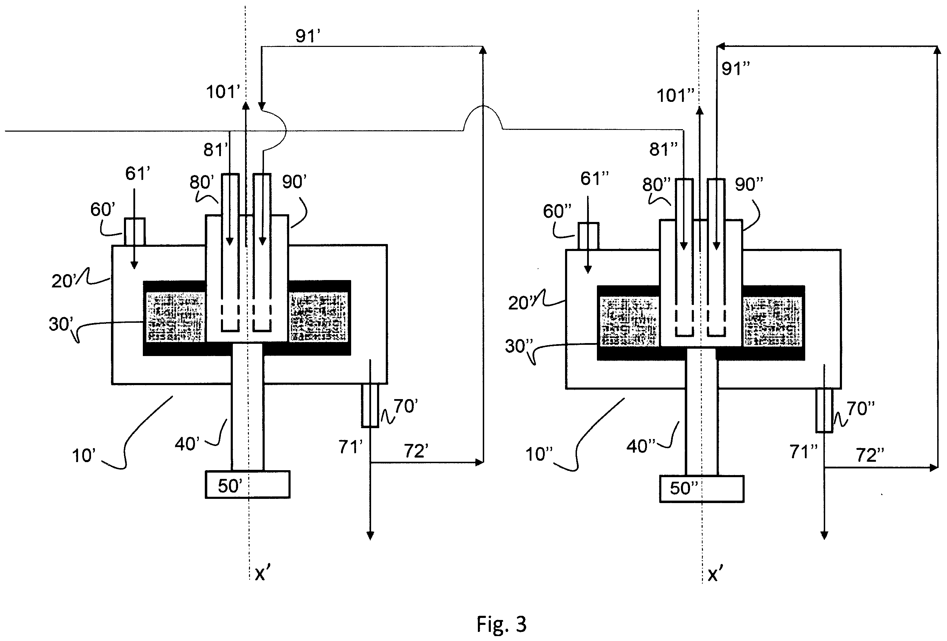

Figure 3 is a simplified representation of the sole circulating flows in a battery comprising a first RPB 10' and a second RPB 10" fluidically connected to each other.

In particular, a first inlet flow 61' is introduced into the stationary vessel 20' and a second inlet flow 81' is introduced into the rotor 30'.

A first outlet flow 101' is obtained from the rotor 30' and a second outlet flow 71' is obtained from the stationary vessel 20'.

According to an embodiment of the present invention, a first portion 72'of the second outlet flow 71' is recirculated to the first RPB 10' as the third inlet flow 91'.

In the second RPB 10", a further first inlet flow 61" is introduced into the further stationary vessel 20" and a further second inlet flow 81" is introduced into the further rotor 30".

A further first outlet flow 101" is obtained from the further rotor 30" and a further second outlet flow 71" is obtained from the further stationary vessel 20".

According to an embodiment of the present invention, a first portion 72"of the further second outlet flow 71" is recirculated to the second RPB 10'' as the further third inlet flow 91".

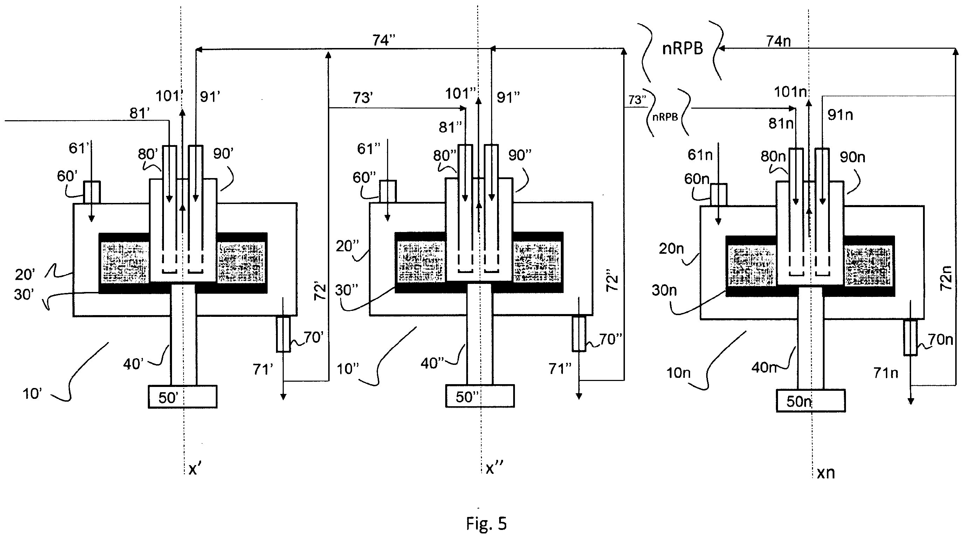

According to an embodiment of the invention, the second inlet flow 81' is represented by fresh solvent, while the further second inlet flow 81" may be represented by:
- a fresh solvent (see Figure 3),
- a second portion 73'of the second outlet flow 71' (see Figure 5), or
- their combination.

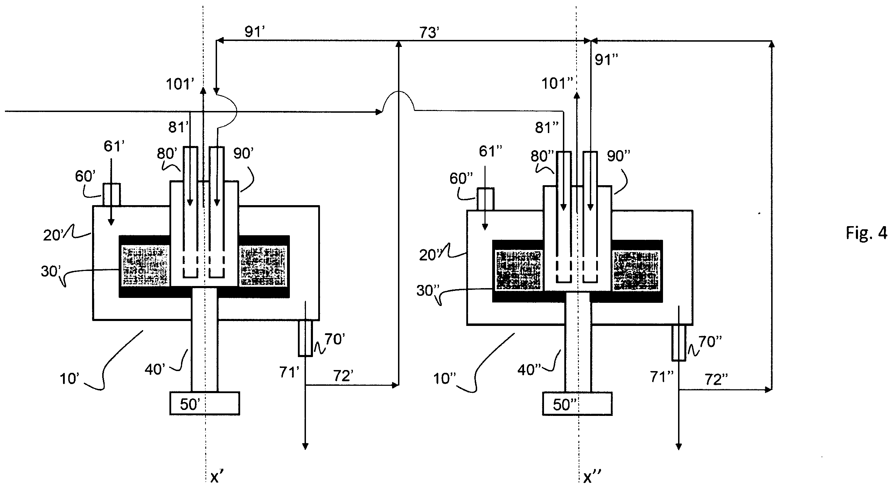

According to an embodiment of the invention, the third inlet flow 91' is represented by a first portion 72' of the second outlet flow 71', while the further third inlet flow 91" may be represented by:
- a second portion 73' of the second outlet flow 71'(see Figure 4),
- a first portion 72" of the further second outlet flow 71'', or
- their combination.

Figure 5 is a simplified schematic representation of the sole circulating flows in a battery of n RPBs comprising a first RPB 10', a second RPB 10'' and a n last RPB 10n fluidically connected to each other in series according to a further alternative configuration of the invention.

In particular, a first inlet flow 61' is introduced into the first stationary vessel 20' and a second inlet flow 81' is introduced into the first rotor 30' of the first RPB 10'.

A first outlet flow 101' is obtained from the first rotor 30' and a second outlet flow 71' is obtained from the first stationary vessel 20' .

In addition to these, a first portion 72' of the second outlet flow 71' is recirculated to the first RPB 10' as the third inlet flow 91'.

In addition and/or as an alternative to the above configuration, a second portion 73' of the second outlet flow 71' is sent to the second RPB 10" and represents the second inlet flow 81'' of the second RPB 10".

In particular, in the second RPB 10'' a further first inlet flow 61" is introduced into the second stationary vessel 20" of the second RPB 10".

A further first outlet flow 101" is obtained from the second rotor 30'' and a further second outlet flow 71" is obtained from the second stationary vessel 20".

In addition to these, a first portion 72"of the further second outlet flow 71'' is recirculated to the second RPB 10" as the further third inlet flow 91".

According to an embodiment of the present invention, a second portion 73" of the further second outlet flow 71" is recirculated to the n RPB 10n as the n second inlet flow 81n.

Optionally, a third portion 74'' of the further second outlet flow 71" is recirculated to the first RPB 10' as the third inlet flow 91'.

In a n last RPB 10n, a n first inlet flow 61n is introduced into the n stationary vessel 20n.

A n first outlet flow 101n is obtained from the n rotor 30n and a n second outlet flow 71n is obtained from the n stationary vessel 20n.

In addition and/or as an alternative to the above configuration, a first portion 72n of the n second outlet flow 71nof the n RPB 10n is recirculated to the n RPB 10n as the n third inlet flow 91n.

In addition and/or as an alternative to the above configuration, a portion 74n of the n second outlet flow 71nof the n RPB 10n is recirculated to one or more of the first RPBs 10' and second RPB 10".

According to the above configuration, in the first RPB 10' the second inlet flow 81' is represented by a flow which has not been recycled, while in the second RPB 10" and the subsequent RPBs until the last n RPB 10n, the further second inlet flow 81" and/or the n second inlet flow 81n comprises a flow which has been recycled.

According to a particular embodiment of the invention, one or more of the second inlet flows 81,81",81n may be represented by a flow of lean solvent.

According to a particular embodiment of the invention, said one or more of the second inlet flows 81,81",81n may be represented by a flow of lean solvent obtained from a stripping unit.

According to a particular, embodiment of the invention, said one or more of the second inlet flows 81,81",81n may be obtained from the same flow of lean solvent.

According to a particular embodiment of the present invention, the RPB is disclosed in order to improve the exchange between a gas and a liquid (gas-liquid exchange) or between vapor and a liquid (vapor-liquid exchange) or between gas and a slurry (gas-slurry exchange).

According to a particular embodiment of the present invention, the RPB is disclosed in order to improve and enhance the exchange between a gas and a liquid.

In particular, according to a preferred embodiment, the first inlet flows 61,61',61" are represented by a gas and the second inlet flows 81,81',81" is represented by a liquid.

According to a more preferred embodiment of the present invention, the first inlet flows 61,61',61" are represented by a loaded gas and the second inlet flow 81,81',81" is represented by a lean solvent.

According to another embodiment of the present invention, there is disclosed a process comprising the improved gas-liquid or gas-slurry or vapor-liquid exchanges using the RPB device above disclosed.

According to a particular embodiment of the present invention, the process has an enhanced exchange between a gas and a liquid.

According to an even more preferred embodiment of the invention, the first inlet flows 61,61',61" are represented by a CO₂-loaded gas and the second inlet flow 81,81',81" is represented by a lean solvent for the capture of CO₂ (or by a solvent which is leaner than the second outlet flows 71,71',71") thereby obtaining a CO₂-deloaded gas and a CO₂-rich solvent.

For the purposes of the present invention, suitable solvents may be for instance selected from the group comprising: amine solvent, potassium carbonate-based solvents.

According to an embodiment of the invention, the CO₂ rich gas is represented by a flue gas, for instance from a Battery Limit (BL), combustion gases, pre-combustion gases, etc.

The application relating to a process of carbon capture from flue-gas with a potassium carbonate solvent, enhanced with an enzyme, wherein the RPB is used in the absorption section refers to the project leading to this application, named ACCSESS, which received funding from the European Union's Horizon 2020 research and innovation program under the grant agreement No 101022487.

According to a particular embodiment of the present invention, there is disclosed a process for the absorption of CO₂ from a CO₂-loaded gas comprising the method above disclosed.

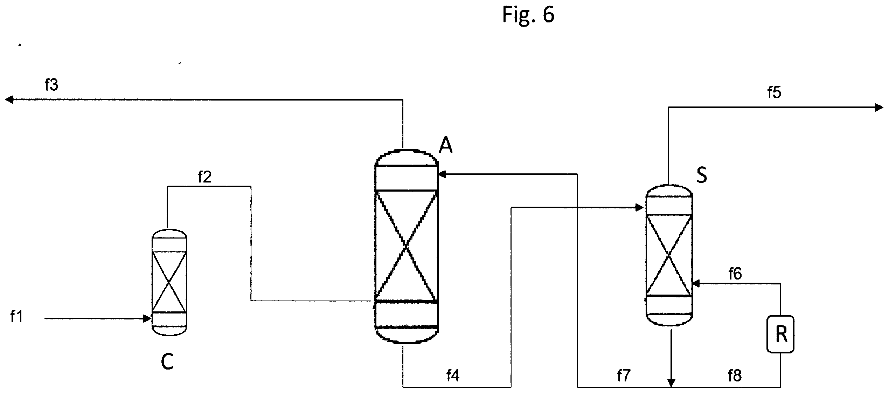

A prior-art process for the absorption of CO₂ from a CO₂-rich gas is schematically shown in Figure 6.

In particular, a CO₂-loaded gas f1 is firstly cooled in a cooling section C and then is sent to an Absorption Unit A where the cooled CO₂-loaded gas f2 is contacted with a flow of a lean solvent, flowing counter-currently inside the packing.

The treated gas f3 exits the Absorption Unit A and it is released without further treatment as a CO₂-deloaded gas, while the CO₂-enriched solvent f4 containing the absorbed CO₂ is collected at the bottom and sent to stripping section S.

In the stripper section S, a flow of CO₂ f5 is released from the CO₂-enriched solvent f4, which flows in the structured packing counter-currently against the vapor stream f6 rising from the reboiler R.

The CO₂ is desorbed from the COz-enriched solvent f4 by increasing the solvent temperature and lowering the CO₂ partial pressure.

The obtained CO₂-lean solvent f7 is sent back from the stripper S to the Absorption Unit A, while a portion of the CO₂-lean solvent f8 is heated by a reboiler R and recycled in the stripping unit S.

According to the present invention, a process for the absorption of CO₂ from a CO₂-loaded gas comprises the steps of:
- contacting a CO₂-loaded gas with an absorption solution represented by lean solvent, thereby obtaining a CO₂-deloaded gas and a CO₂-enriched solvent,
- recycling at least part of said CO₂-enriched solvent to the contacting step.

For the purposes of the present invention, the contacting step is performed in an Absorption Unit A comprising a RPB.

In a particular embodiment, in the process of the present invention for the absorption of CO₂ from a CO₂-loaded gas there is used a lean solvent comprising a biocatalyst.

In a more particular embodiment, said biocatalyst is represented by an enzyme.

In a particular embodiment, in the process of the present invention for the absorption of CO₂ from a COz-loaded gas there is used a biocatalyst represented by carbonic anhydrase as the enzyme.

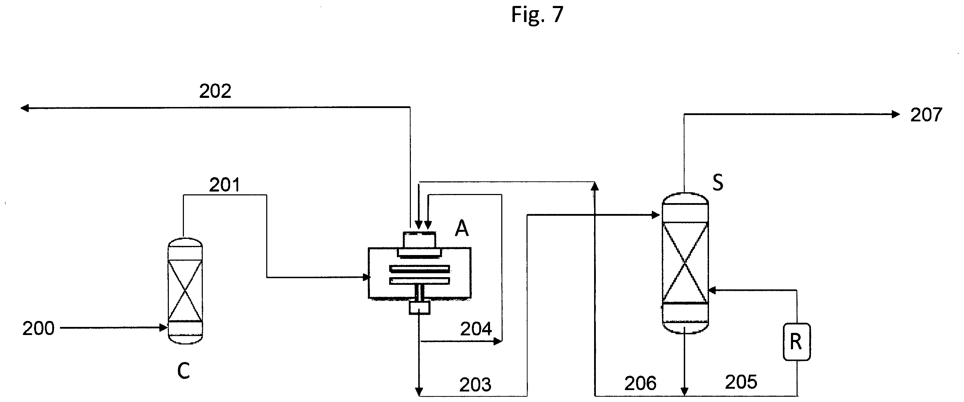

Figure 7 discloses the main steps of a process for the capture of CO₂ from a CO₂-loaded gas according to the present invention, wherein the Absorption Unit comprises a RPB.

In particular, a CO₂-loaded gas 200 is firstly cooled in a cooling section C obtaining a cooled CO₂-loaded gas 201, which is sent to an Absorption Unit A represented by a RPB, wherein the CO₂ is absorbed obtaining a CO₂-deloaded gas 202 and a CO₂-enriched solvent flow 203.
A portion of the CO₂-enriched solvent flow 204 is recycled to the Absorption Unit A represented by the RPB.

The flow of CO₂-enriched solvent flow 203 is sent to a stripping unit S thereby obtaining a CO₂ flow 207 and a flow of lean solvent 206, which is sent to the Absorption Unit A.

A portion of the lean solvent flow 205 is heated by a reboiler R and recycled to the stripping unit S.

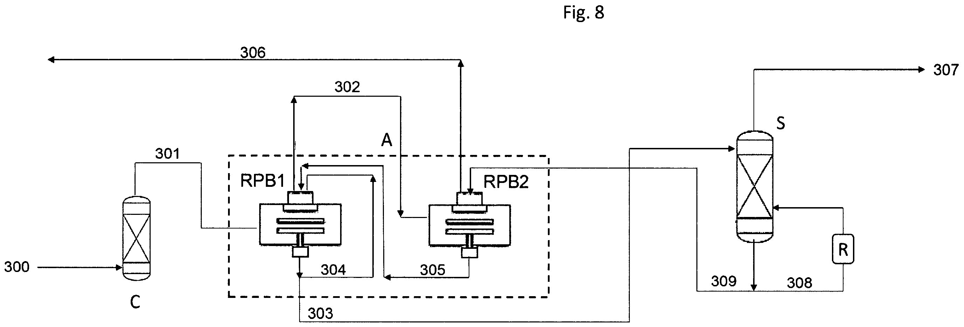

Figure 8 discloses the main steps of a process for the capture of CO₂ from a CO₂-loaded gas according to the present invention, wherein the Absorption Unit comprises a battery of two RPBs in series.

In particular, a CO₂-loaded gas 300 is firstly cooled in a cooling section C obtaining a cooled CO₂-loaded gas 301, which is sent to the first RPB (RPB1) of the Absorption Unit A, wherein the CO₂ is absorbed obtaining a CO₂ partially deloaded gas flow 302 and a first COz-enriched solvent flow 303.

The CO₂ partially deloaded gas flow 302 is sent to the second RPB (RPB2) of the Absorption Unit A, wherein CO₂ is further absorbed obtaining a COz-deloaded gas flow 306 and a second CO₂-enriched solvent flow 305.

The second CO₂-enriched solvent flow 305 is sent to the first RPB (RPB1) according to the present invention.

For the purposes of the present invention, a portion of the first CO₂-enriched solvent flow 304 is recycled within the first RPB (RPB1).

The first CO₂-enriched solvent flow 303 is sent to a stripping unit S thereby obtaining a CO₂ flow 307 and a flow of CO₂-lean solvent 309, which is sent to the second RPB (RPB2) of the Absorption unit A.

A portion of the CO₂-lean solvent flow 308 is heated by a reboiler R and recycled to the stripping unit S.

With reference to the above embodiment, for the purposes of the present invention, the first CO₂-enriched solvent flow 303 comprises a higher concentration of CO₂ with respect to the second CO₂-rich solvent flow 305.

According to an embodiment of the present invention, a RPB according to the above disclosure may also be used as the Stripping Unit. According to a second object, the present invention discloses a RPB device, which improves the gas-liquid or gas-slurry or vapor-liquid exchanges.

In particular, the disclosed RPB is the one above disclosed in relation to the process of the invention.

More in particular, said RPB comprises a stationary vessel 20 housing a rotor 30 mechanically coupled to a shaft 40 connected to a motor 50 for rotation around axis x, said rotor 30 being defined in cross-section by a circular internal wall 441 and by a circular external wall 442 comprising a packed bed 430 therebetween, an internal part of the rotor (core) 440 and having a first diameter d1 and a second diameter d2 passing through a center O on the longitudinal axis x of the RPB device 10, said stationary vessel 20 comprising a first inlet port 60 for introducing a first inlet flow 61 into the stationary vessel 20, the RPB also comprises a second inlet port 80 for introducing a second inlet flow 81 into the rotor 30 and a third inlet port 90 for introducing a third inlet flow 91 into the rotor 30.

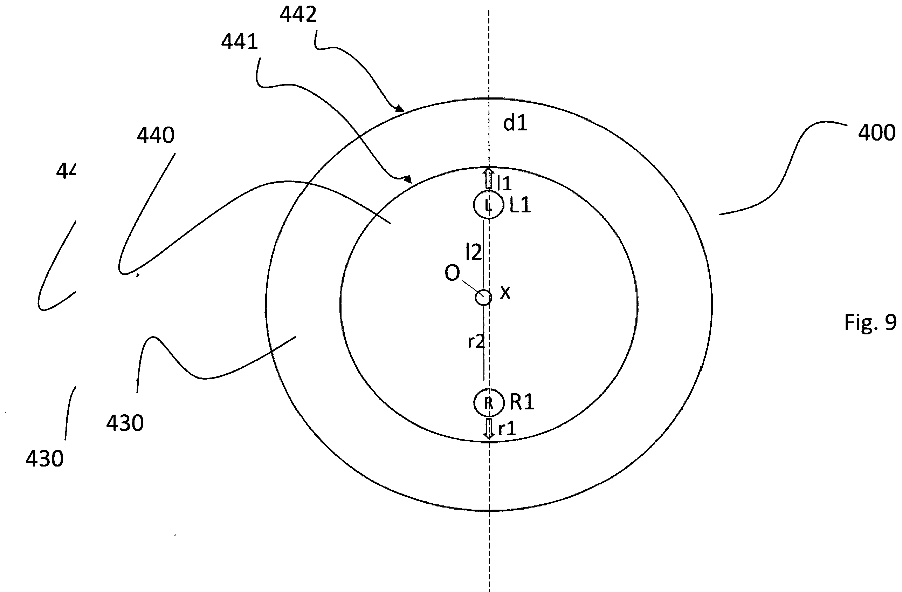

The second inlet flow is introduced via one or more pipes of the lean solvent, while the third inlet flow is introduced via one or more pipe of the recycled solvent, according to the above disclosure. Figure 9 is the schematic representation of a cross-section of the rotor 400 of an RPB of the invention on a plane perpendicular to the longitudinal axis x of the RPB according to an embodiment of the present invention.

The rotor 400 is defined by a.circular internal wall 441 and by a circular external wall 442 comprising a packed bed 430 between them, an internal part of the rotor (core) 440 and a center 0 passing through the longitudinal axis x of the rotor 400.

According to an embodiment, the lean solvent inlet flow assembly comprises one pipe L1 and the recycled solvent inlet flow assembly comprises one pipe R1.

In the following description, the reference to pipes shall be intended to their cross-section as represented in Figures 9 to 12.

In a preferred embodiment, both the pipe of the lean solvent L1 and the pipe of the recycled solvent R1 are distributed along a diameter d1; in particular, the distance l1,r1 of each pipe L1,R1 from the circular internal wall 441 is shorter than the distance l2,r2 of each pipe L1,R1 from the center O (in other words, they are closer to the circular internal wall than to the center O).

According to an embodiment, the pipes of the lean solvent L1 and the pipe of the recycled solvent R1 are 180° offset to each other along the diameter d1 (in other word, they are longitudinally disposed so that their cross-sections are 180° offset to each other along the diameter d1).

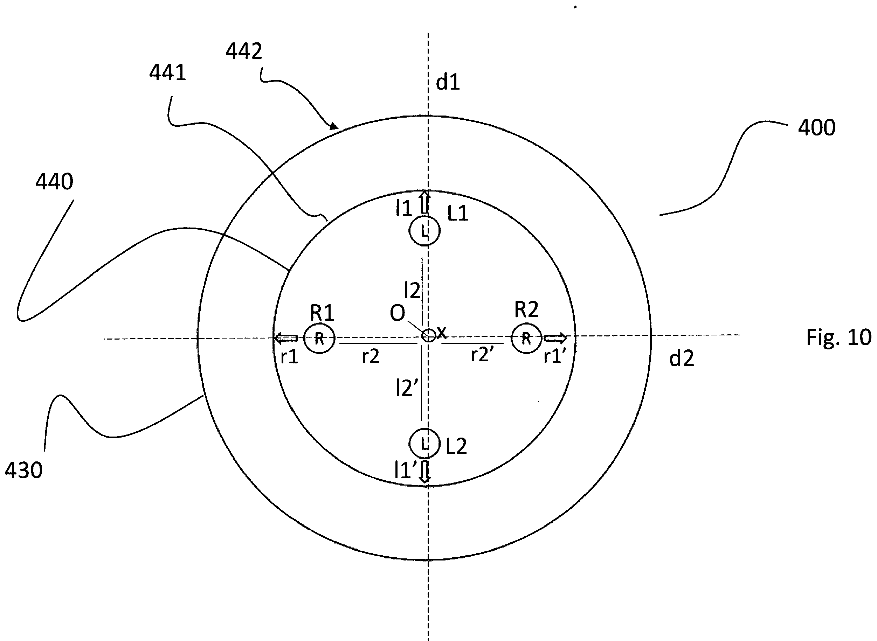

Figure 10 is the schematic representation of a cross-section of the rotor 400 on a plane perpendicular to the longitudinal axis x according to another embodiment of the present invention.

According to said embodiment, the lean solvent inlet flow assembly comprises two pipes L1,L2 and the recycled solvent inlet flow assembly comprises two pipes R1,R2.

In a preferred embodiment, both the pipes of the lean solvent L1,L2 are distributed along a first diameter d1 and both the pipes of the recycled solvent R1,R2 are distributed along a second diameter d2.

In a particular embodiment, the distance to the circular internal wall 441 of at least one of the pipes of the lean solvent L1,L2 and/or of at least one of the pipes of the recycled solvent R1,R2 is shorter than the distance from the center O (in other words, they are closer to the circular internal wall 441 than to the center O).

In a particular embodiment, the pipes of the lean solvent L1,L2 and the pipes of the recycled solvent R1,R2 are distributed along diameters d1,d2 having an equal angular pitch.

In a particular embodiment, the two pipes of the lean solvent L1,L2 are 180° offset to each other along the first diameter d1.

In a particular embodiment, the two pipes of the recycled solvent R1,R2 are 180° offset to each other along the second diameter d2.

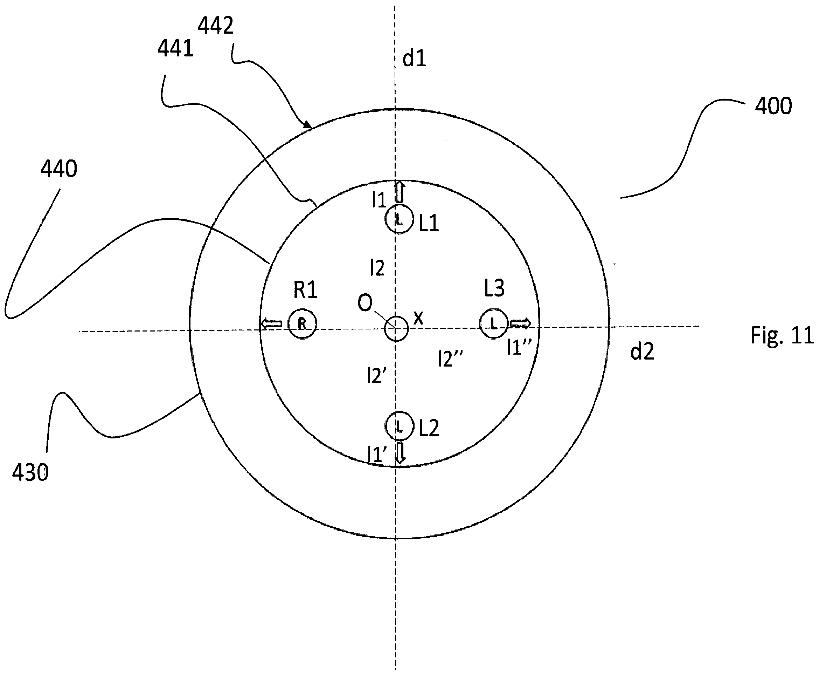

Figure 11 is the schematic representation of a cross-section of the rotor 400 on a plane perpendicular to the longitudinal axis x according to a further embodiment of the present invention.

According to said embodiment, the lean solvent inlet flow assembly comprises three pipes L1,L2, L3 and the recycled solvent inlet flow assembly comprises one pipe R1.

In a preferred embodiment, the first and the second pipes of the lean solvent L1,L2 are distributed along a first diameter d1 and the third pipe of the lean solvent L3 and the pipe of the recycled solvent R1 are distributed along a second diameter d2.

In a particular embodiment, the distance to the circular internal wall 441 of at least one of the pipes of the lean solvent L1,L2,L3 and/or of the pipe of the recycled solvent R1 is shorter than the distance from the center O (in other words, they are closer to the circular internal wall 441 than to the center O).

In a particular embodiment, the pipes of the lean solvent L1,L2,L3 and the pipe of the recycled solvent R1 are distributed along diameter d1,d2 having an equal angular pitch.

In a particular embodiment, the first and the second pipes of the lean solvent L1,L2 are 180° offset to each other along the first diameter d1.

In a particular embodiment, the third pipe L3 of the lean solvent and the pipe of the recycled solvent R1 are 180° offset to each other along the second diameter d2.

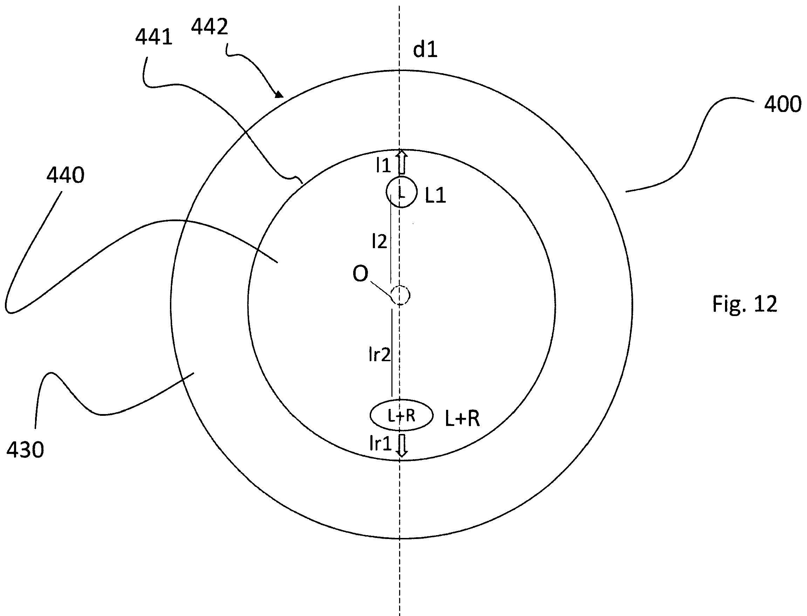

Figure 12 is the schematic representation of a cross-section of the rotor 400 on a plane perpendicular to the longitudinal axis x according to an even further embodiment of the present invention.

According to said embodiment, the lean solvent inlet flow assembly comprises one pipe L1, while a pipe for a mixed solvent L+R is also provided.

With "mixed solvent" it is intended a solvent comprising a portion of one or more of: a fresh solvent, a recycled solvent.

In a preferred embodiment, the pipe of the lean solvent L1 and the pipe of the mixed solvent L+R are distributed along a diameter d1.

In a particular embodiment, the distance to the circular internal wall 441 of at least one of the pipes of the lean solvent L1 and/or of the pipe of the mixed solvent L+R is shorter than the distance from the center O (in other words, they are closer to the circular internal wall 441 than to the center 0).

In a particular embodiment, the pipe of the lean solvent L1 and the pipe of the mixed solvent L+R are 180° offset to each other along the diameter d1.

For the purposes of the present invention, the lean solvent, the recycled solvent and the mixed solvent are delivered to the packed bed through apertures (not shown in the figures) in the pipes wall facing the circular external wall of the rotor 441.

For the purposes of the present invention, the above configurations apply to those applications using a single RPB; accordingly, the term "lean solvent" shall be intended as the fresh solvent and "recycled solvent" shall be intended as the solvent recycled from the same RPB.

Alternatively, in those configurations wherein the Absorption Unit comprises a battery of two RPBs comprising a first RPB (RPB1) and a second RPB (RPB2), the term "lean solvent" shall be intended as fresh solvent and the term "recycled solvent" shall be intended as the solvent recycled from the same first RPB (RPB1) and/or from the second RPB (RPB2).

Alternatively, in those configurations wherein the Absorption Unit comprises a battery of more than two RPBs (RPBn-1, RPBn, RPBn+1), the term "lean solvent" shall be intended as fresh solvent or a solvent recycled from the preceding RPBs (RPB-1) and the term "recycled solvent" shall be intended as the solvent recycled from the same RPB (RPBn) and/or from the subsequent RPB (RPBn+1).

For the purposes of the present invention, a recycle ratio shall be intended as the ratio of the flow rate of the recycled solvent to the lean solvent, expressed as a percentage.

On a general basis, the percentage of recycled solvent is at least 1%.

According to measurements which were performed to increase the CO₂ absorption efficiency, an optimal recycle ratio achieved has been observed between 60% and 100% of lean solvent flowrate. Such results depend on specific operating conditions for the plant (such as CO₂ concentration in flue-gas, gas flowrate, etc...). Measurements have been carried out according to the ACCSESS project test campaign.

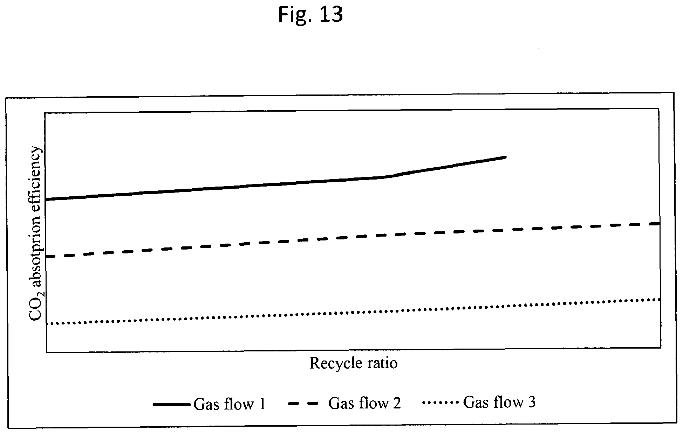

An increase in CO₂ capture efficiency by using solvent recycling was observed during operation using RPB absorber (Figure 13). During the experiment, the efficiency of CO₂ capture from exhaust gas was measured in the RPB apparatus according to the invention.

Measurements were carried out for three different gas flows, where in all cases the lean solvent L/G ratio was in the range of 5 to 10 kg/kg.

Therefore, the present invention discloses:
- A method for the gas-liquid or gas-slurry or vapor-liquid exchange using a Rotating Packed Bed device (10,10'), said method comprising the step of contacting a first inlet flow (61,61',61",61n) with a second inlet flow (81,81',81",81n) obtaining a first outlet flow (101,101',101",101n) from said first inlet flow (61,61',61",61n), and a second outlet flow (71,71',71",71n) from said second inlet flow (81,81',81",81n), wherein said contacting step is carried out in said Rotating Packed Bed device (10,10',10",10n) and wherein at least a first portion of said second outlet flow (72,72',72",72n) is at least partially recirculated to the contacting step as a third inlet flow (91,91',91",91n).
- The method of the invention for the gas-liquid or gas-slurry or vapor-liquid exchange using a Rotating Packed Bed device (10,10',10",10n), wherein said Rotating Packed Bed device (10,10',10",10n) comprises a stationary vessel (20,20',20",20n) housing a rotor (30,30',30",30n,400) mechanically coupled to a shaft (40) connected to a motor (50) for rotation around the longitudinal axis x, said rotor (30,30',30",30n,400) housing a packed bed, the rotor (30,30',30",30n,400) and the stationary vessel (20,20',20",20n) being in fluid communication, said Rotating Packed Bed device (10,10') comprising a first inlet port (60,60',60",60n) for introducing said first inlet flow (61,61',61",61n) into the stationary vessel (20,20',20", 20n), which is released as the first outlet flow (101,101',101",101n) through the first outlet port (100,100',100",100n), and wherein said first outlet port (100,100',100",100n) is coupled to and in fluidic connection with the rotor (30,30',30",30n,400), the Rotating Packed Bed device (10,10',10",10n) also comprising a second inlet port (80,80',80",80n) connected to a first liquid distributor for introducing a second inlet flow (81,81',81",81n) into the rotor (30,30',30",30n,400), which is released as the second outlet flow (71,71',71",71n) from the stationary vessel (20,20',20",20n) through a second outlet port (70,70',70",70n), wherein the Rotating Packed Bed device (10,10',10",10n) also comprises a third inlet port (90,90',90",90n) connected to a second liquid distributor for introducing a third inlet flow (91,91',91",91n) into the rotor (30,30',30",30n,400).
- The method of the invention for the gas-liquid or gas-slurry or vapor-liquid exchange, wherein said a first Rotating Packed Bed device (10') is fluidically connected to a second Rotating Packed Bed device (10"), wherein said first portion of said second outlet flow (72',72") is at least partially recirculated to the contacting step as a third inlet flow (91',91") to said first Rotating Packed Bed device (10,10') and/or to said second Rotating Packed Bed device (10").
- The method of the invention for the gas-liquid or gas-slurry or vapor-liquid exchange, wherein said first Rotating Packed Bed device (10,10') is fluidically connected to a second Rotating Packed Bed device (10''), wherein said second portion of said second outlet flow (71,71') is at least partially recirculated to the contacting step as the second inlet flow (81,81') of said second Rotating Packed Bed device (10'').
- The method of the invention for the gas-liquid or gas-slurry or vapor-liquid exchange according to claim 3 or 4, wherein said first Rotating Packed Bed device (10,10') is fluidically connected to a second Rotating packed Bed device (10"), which is fluidically connected to n Rotating Packed Bed devices (10n) from which a n second outlet flow (71n) is obtained, wherein a first portion of the n second outlet flow (72n) is at least partially recirculated to the contacting step as the third inlet flow (91',91",91n) of said first Rotating Packed Bed device (10') and/or of said second Rotating Packed Bed device (10") and/or of said n Rotating Packed Bed device (10n).
- A process for the capture of CO₂ from CO₂-rich gases comprising the step of performing the method of the invention, wherein said first inlet flow (61,61',61",61n) is represented by a CO₂-loaded gas and the second inlet flow (81,81',81",81n) is represented by a lean solvent for the capture of CO₂, and obtaining a first outlet flow (101,101',101",101n) represented by CO₂-deloaded gas and a second outlet flow (71,71',71",71n) represented by a CO₂-enriched solvent.
- The process for the capture of CO₂ from CO₂-rich gases comprising the step of performing the method of the invention, wherein the lean solvent comprises an enzyme.
- The process of the invention for the capture of CO₂ from CO₂-rich gases, wherein said enzyme is a carbonic anhydrase.
- The process of the invention for the capture of CO₂ from CO₂-rich gases, further comprising the step of desorbing CO₂ from the CO₂-enriched solvent obtaining a CO₂-lean solvent (206) and a CO₂ flow (207), wherein said step of desorbing is carried out in a Stripping Unit.
- The process of the invention for the capture of CO₂ from CO₂-rich gases, wherein said Stripping Unit is represented by a Rotating Packed Bed device.
- A Rotating Packed Bed device (10,10',10",10n) comprising a stationary vessel (20,20',20",20n) housing a rotor (30,30',30",30n,400) mechanically coupled to a shaft (40,40',40",40n) connected to a motor (50,50',50",50n) for rotation around a longitudinal axis x,x',x",xn, said rotor (30,30',30",30n,400) being defined in cross-section by a circular internal wall (441) and by a circular external wall (442) comprising a packed bed (430) therebetween, and comprising an internal part of the rotor (30,30',30",30n,440), and having a first diameter (d1) and a second diameter (d2) passing through a center O on the longitudinal axis x,x',x",xn of the Rotating Packed Bed device (10,10',10",10n), said Rotating Packed Bed device (10,10',10",10n) comprising a first inlet port (60,60',60",60n) for introducing a first inlet flow (61,61'61",61n) into the stationary vessel (20,20',20",20n), the Rotating Packed Bed device (10,10',10",10n) also comprising a second inlet port (80,80',80",80n) for introducing a second inlet flow (81,81',81",81n) into the internal part of the rotor (30,30',30" ,30n,440) via one or more pipes of a lean solvent (L1,L2,L3), the Rotating Packed Bed device (10,10',10",10n) also comprising a third inlet port (90,90',90",90n) for introducing into the internal part of the rotor (30,30',30",30n,440) a third inlet flow (91,91',91",91n) via one or more pipes of a recycled solvent (R1,R2) or a pipe of a lean-recycled mixed solvent (L+R), wherein in cross-section the distance of the one or more of the pipes of the lean solvent (11,11',11"), the distance of the one or more of the pipes of the recycled solvent (r1,r1') and the distance of the pipe of the lean-recycled mixed solvent (lr1) from said internal wall (441) is shorter than the respective distance of one or more of the pipes of the lean solvent (12,12',12") and, respectively, the distance of the one or more of the pipes of the recycled solvent (r2,r2') or the pipe of the lean-recycled mixed solvent (lr2) from said center (O).
- The Rotating Packed Bed device (10,10',10",10n) of the invention, wherein any one of: said one or more pipes of a lean solvent (L1,L2,L3), said one or more pipes of a recycled solvent (R1,R2), said pipe of lean-recycled mixed solvent (L+R) are distributed along the same of a one or more diameters (d1,d2) of the rotor or are distributed along different diameters (d1,d2) of the rotor.
- The Rotating Packed Bed device (10,10',10",10n) of the invention, wherein said diameters (d1,d2) are offset to each other by 180°.

From the above disclosure, the advantages offered by the present invention will be immediately evident.

First of all, the use of solvent recycling in RPB absorbers has shown to improve the hydrodynamic conditions inside the device, by increasing the liquid load, which increases the absorption efficiency.

As a consequence of the increased packing liquid load, the gas micromixing is also improved.

Both the disclosed configuration of the full premixing and the separate distribution of lean and rich liquid in different parts of the packing bed have shown to allow a better utilization of the driving force.

As per the specific application of the CO₂ absorption, the improvement in the efficiency of the process re-duce the solvent consumption per kilogram of absorbed CO₂.

Overall, the method of the invention allows a higher operational flexibility.

## Claims

1. A method for the gas-liquid or gas-slurry or vapor-liquid exchange using a Rotating Packed Bed device (10,10'), said method comprising the step of contacting a first inlet flow (61,61',61",61n) with a second inlet flow (81,81',81",81n) obtaining a first outlet flow (101,101',101",101n) from said first inlet flow (61,61',61",61n), and a second outlet flow (71,71',71",71n) from said second inlet flow (81,81,81",81n), wherein said contacting step is carried out in said Rotating Packed Bed device (10,10',10",10n) and wherein at least a first portion of said second outlet flow (72,72',72",72n) is at least partially recirculated to the contacting step as a third inlet flow (91,91',91",91n).

2. The method for the gas-liquid or gas-slurry or vapor-liquid exchange using a Rotating Packed Bed device (10,10',10",10n) according to the preceding claim, said Rotating Packed Bed device (10,10',10",10n) comprising a stationary vessel (20,20',20'',20n) housing a rotor (30,30',30",30n,400) mechanically coupled to a shaft (40) connected to a motor (50) for rotation around the longitudinal axis x, said rotor (30,30',30",30n,400) housing a packed bed, the rotor (30,30',30",30n,400) and the stationary vessel (20,20',20",20n) being in fluid communication, said Rotating Packed Bed device (10,10') comprising a first inlet port (60,60',60",60n) for introducing said first inlet flow (61,61',61",61n) into the stationary vessel (20,20',20",20n), which is released as the first outlet flow (101,101',101",101n) through the first outlet port (100,100',100",100n), and wherein said first outlet port (100,100',100",100n) is coupled to and in fluidic connection with the rotor (30,30',30'',30n,400), the Rotating Packed Bed device (10,10',10",10n) also comprising a second inlet port (80,80',80",80n) connected to a first liquid distributor for introducing a second inlet flow (81,81',81'',81n) into the rotor (30,30',30",30n,400), which is released as the second outlet flow (71,71',71",71n) from the stationary vessel (20,20', 20'', 20n) through a second outlet port (70,70',70",70n), wherein the Rotating Packed Bed device (10,10',10",10n) also comprises a third inlet port (90,90',90",90n) connected to a second liquid distributor for introducing a third inlet flow (91,91',91",91n) into the rotor (30,30',30",30n,400).

3. The method for the gas-liquid or gas-slurry or vapor-liquid exchange according to the preceding claim 1 or 2, wherein said a first Rotating Packed Bed device (10') is fluidically connected to a second Rotating Packed Bed device (10"), wherein said first portion of said second outlet flow (72',72") is at least partially recirculated to the contacting step as a third inlet flow (91',91'') to said first Rotating Packed Bed device (10,10') and/or to said second Rotating Packed Bed device (10").

4. The method for the gas-liquid or gas-slurry or vapor-liquid exchange according to claim 1, wherein said first Rotating Packed Bed device (10,10') is fluidically connected to a second Rotating Packed Bed device (10"), wherein said second portion of said second outlet flow (71,71') is at least partially recirculated to the contacting step as the second inlet flow (81,81') of said second Rotating Packed Bed device (10").

5. The method for the gas-liquid or gas-slurry or vapor-liquid exchange according to claim 3 or 4, wherein said first Rotating Packed Bed device (10,10') is fluidically connected to a second Rotating packed Bed device (10"), which is fluidically connected to n Rotating Packed Bed devices (10n) from which a n second outlet flow (71n) is obtained, wherein a first portion of the n second outlet flow (72n) is at least partially recirculated to the contacting step as the third inlet flow (91',91",91n) of said first Rotating Packed Bed device (10') and/or of said second Rotating Packed Bed device (10") and/or of said n Rotating Packed Bed device (10n).

6. A process for the capture of CO₂ from CO₂-rich gases comprising the step of performing the method according to any one of the preceding claims, wherein said first inlet flow (61,61' ,61" ,61n) is represented by a CO₂-loaded gas and the second inlet flow (81,81',81",81n) is represented by a lean solvent for the capture of CO₂, and obtaining a first outlet flow (101,101',101",101n) represented by COz-deloaded gas and a second outlet flow (71,71',71",71n) represented by a CO₂-enriched solvent.

7. The process for the capture of CO₂ from CO₂-rich gases comprising the step of performing the method according to any one of the preceding claims, wherein the lean solvent comprises an enzyme.

8. The process for the capture of CO₂ from CO₂-rich gases according to the preceding claim, wherein said enzyme is a carbonic anhydrase.

9. The process for the capture of CO₂ from CO₂-rich gases according to any one of the preceding claims 6 to 8, further comprising the step of desorbing CO₂ from the CO₂-enriched solvent obtaining a CO₂-lean solvent (206) and a CO₂ flow (207), wherein said step of desorbing is carried out in a Stripping Unit.

10. The process for the capture of CO₂ from CO₂-rich gases according to the preceding claim, wherein said Stripping Unit is represented by a Rotating Packed Bed device.

11. A Rotating Packed Bed device (10,10',10",10n) comprising a stationary vessel (20,20',20",20n) housing a rotor (30,30',30",30n,400) mechanically coupled to a shaft (40,40',40",40n) connected to a motor (50,50',50",50n) for rotation around a longitudinal axis x,x',x'',xn, said rotor (30,30',30"',30n,400) being defined in cross-section by a circular internal wall (441) and by a circular external wall (442) comprising a packed bed (430) therebetween, and comprising an internal part of the rotor (30,30',30",30n,440), and having a first diameter (d1) and a second diameter (d2) passing through a center O on the longitudinal axis x,x',x",xn of the Rotating Packed Bed device (10,10',10",10n), said Rotating Packed Bed device (10,10',10",10n) comprising a first inlet port (60,60',60",60n) for introducing a first inlet flow (61,61',61",61n) into the stationary vessel (20,20',20",20n), the Rotating Packed Bed device (10,10',10",10n) also comprising a second inlet port (80,80',80",80n) for introducing a second inlet flow (81,81',81",81n) into the internal part of the rotor (30,30',30",30n,440) via one or more pipes of a lean solvent (L1,L2,L3), the Rotating Packed Bed device (10,10',10",10n) also comprising a third inlet port (90,90',90",90n) for introducing into the internal part of the rotor (30,30',30",30n,440) a third inlet flow (91,91',91",91n) via one or more pipes of a recycled solvent (R1,R2) or a pipe of a lean-recycled mixed solvent (L+R), wherein in cross-section the distance of the one or more of the pipes of the lean solvent (l1,l1',l1"), the distance of the one or more of the pipes of the recycled solvent (r1,r1') and the distance of the pipe of the lean-recycled mixed solvent (lr1) from said internal wall (441) is shorter than the respective distance of one or more of the pipes of the lean solvent (l2,l2',l2") and, respectively, the distance of the one or more of the pipes of the recycled solvent (r2,r2') or the pipe of the lean-recycled mixed solvent (lr2) from said center (O).

12. A Rotating Packed Bed device (10,10',10",10n) according to the preceding claim, wherein any one of: said one or more pipes of a lean solvent (L1,L2,L3), said one or more pipes of a recycled solvent (R1,R2), said pipe of lean-recycled mixed solvent (L+R) are distributed along the same of a one or more diameters (d1,d2) of the rotor or are distributed along different diameters (d1,d2) of the rotor.

13. A Rotating Packed Bed device (10,10',10",10n) according to the any one of the preceding claim 11 or 12, wherein said diameters (d1,d2) are offset to each other by 180°.
